# EUROPEAN PATENT APPLICATION

(11) **EP 1 637 772 A1**
(43) Date of publication of application: **22.03.2006**
(21) Application number: 04425688.1
(22) Date of filing: 16.09.2004
(51) Int. Cl.: F16H 25/22

(54) **Ball screw with recirculation on the shaft**

(71) Applicant: Umbra Cuscinetti S.p.A., 06034 Foligno (IT)
(72) Inventor: Perni, Federico, 06039 Trevi (IT); Picone, Raffaele, 06034 Foligno (IT); Pizzoni, Luciano, 06034 Foligno (IT); Porzi, Carlo, 06034 Foligno (IT)
(74) Representative: Cerbaro, Elena

(57) **Abstract**

A ball screw is defined by a shaft (2) and by a nut (8) mutually coupled by means of at least a train (14) of balls (15) engaged in a relevant track (13), a first segment (16) of which is wound helically around a longitudinal axis (3) of the screw, is defined between a thread (11) obtained on an inner surface (10) of the nut (8) and a groove (5) obtained on an outer surface (4) of the shaft (2), and has an inlet end (17) and an outlet end (18); the groove (5) being closed in a loop around the axis (3) to define a second segment of the track (13) shaped to allow the balls (15) to recirculate between the outlet and inlet ends (18, 17).

## Description

The present invention relates to a ball screw.

In particular, the present invention relates to a ball screw of the type comprising a shaft having a determined longitudinal axis and provided with a first thread obtained on its outer surface; and a nut provided with a second thread obtained on its inner surface and coupled to the shaft by means of a ball coupling comprising at least one track and a train of balls engaged in the track.

The track extends along a path that is closed in a loop and comprises a first segment defined between the two threads, a second segment defined by a hole drilled through the shaft, and two deviating elements, which are inserted in respective seats obtained on the shaft, and are able to join the second segment with the ends of the first segment to allow the recirculation of the balls.

Known ball screws of the type described above have some drawbacks, mainly deriving from the fact that obtaining the aforesaid hole and the aforesaid seats in the shaft is relatively complex and costly and it further entails a structural weakening of the shaft itself.

The object of the present invention is to provide a ball screw that is free of the drawbacks described above and that is simple and economical to obtain.

According to the present invention, a ball screw as claimed in claim 1 is provided.

A non-limiting embodiment of the present invention will be described by way of example with reference to the accompanying drawings, in which:
Figure 1 is a schematic view in perspective, with parts sectioned and parts removed for the sake of clarity, of a preferred embodiment of the ball screw according the present invention;
Figure 2 is a longitudinal section, with parts removed for the sake of clarity, of the ball screw of Figure 1; and
Figure 3 is similar to Figure 2 and shows a variation of the ball screw of Figures 1 and 2.

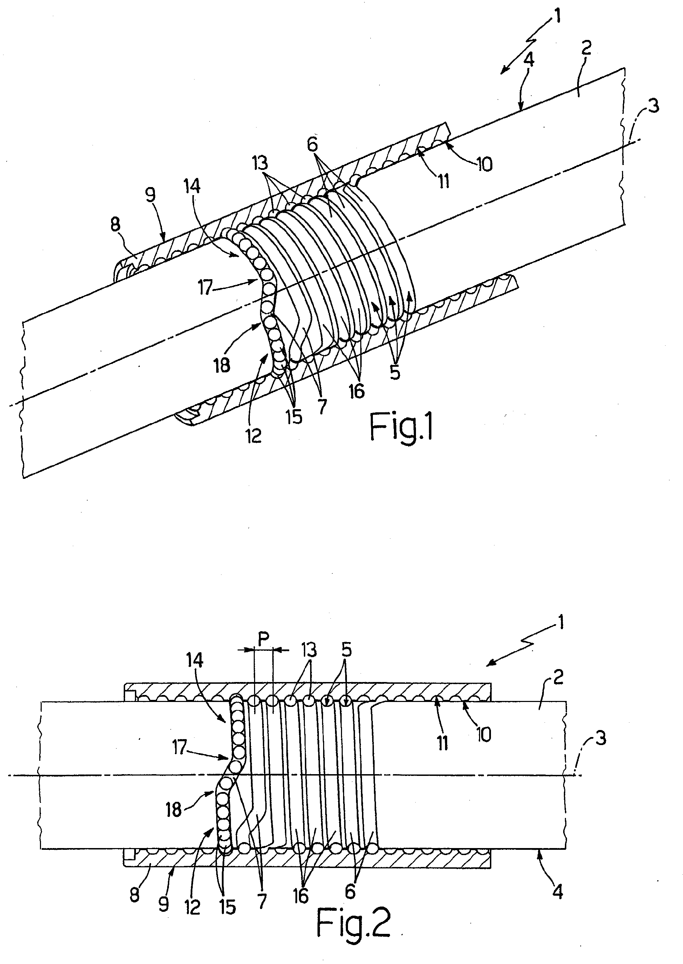

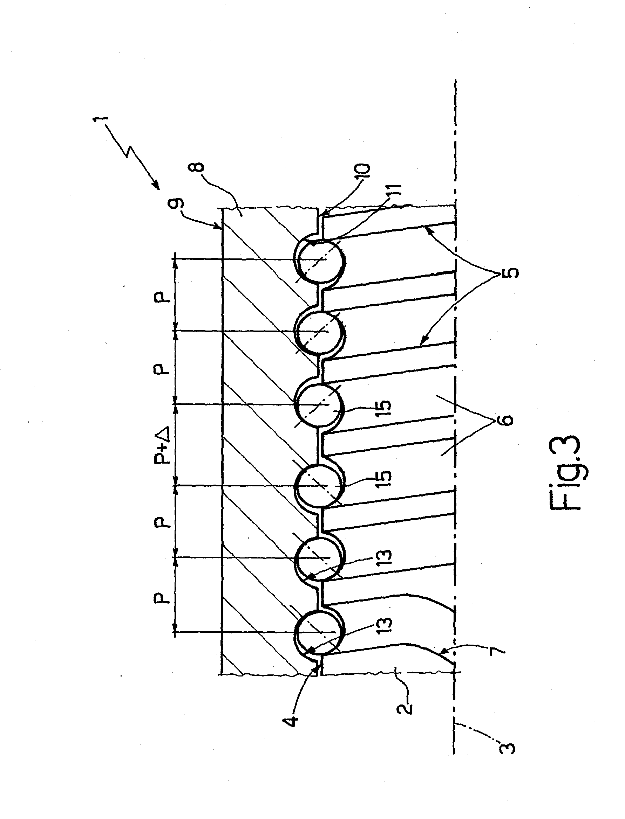

With reference to Figures 1 and 2, number 1 indicates as a whole a ball screw comprising a substantially cylindrical shaft 2, which has a determined longitudinal axis 3, is externally limited by a cylindrical surface 4 coaxial to the axis 3, and is provided with a plurality of grooves 5 (in this specific case, eight grooves 5) entirely obtained on the surface 4 and distributed in succession along the axis 3.

Each groove 5 is closed in a loop around the axis 3 and comprises a first portion 6 helically wound around the axis 3 with a determined pitch P and according to an angle approximating an angle of 360° by defect, and a second portion 7 extending between the ends of the portion 6 itself. In regard to the above, it should be pointed out that the portions 7 of the grooves 5 are circumferentially offset with respect to one another around the axis 3 and are distributed along the axis 3 with the aforementioned pitch P.

In a variation not shown, the portions 7 are aligned to each other parallel to the axis 3 in such a way as to facilitate the processes for the production of the shaft 2, such as forging, injection, milling, and grinding.

The screw 1 further comprises a tubular nut 8, which is mounted coaxially to the shaft 2, is externally limited by a continuous surface 9 coaxial to the axis 3, is limited internally by a cylindrical surface 10 coaxial to the axis 3, and has an internal thread 11 obtained on the surface 10 and wound around the axis 3 with the aforesaid pitch P.

The nut 8 is coupled to the shaft 2 by means of a ball coupling 12 comprising, for each groove 5, a track 13 and a train 14 of balls 15, which are engaged in the track 13, and have such a diameter that the screw 1 is a screw with axial play.

Each track 13 is closed in a loop around the axis 3 and comprises a first segment 16, which is defined between the relevant portion 6 and the thread 11, and has an inlet end 17 and an outlet end 18, and a second segment defined by the relevant portion 7, which has a greater radial depth than the radial depth of the portion 6 to allow the relevant balls 15 to disengage the thread 11 and to recirculate between the ends 17 and 18 along the track 13.

In a variation not shown, the tracks 13 are engaged by balls having such a diameter that the screw 1 is a pre-loaded screw with zero axial play.

According to another variation not shown, when the screw 1 must be used with relatively high loads, the grooves 5 are distributed along the axis 3 with the pitch P and the balls 15 of each train 14 of balls 15 have a different diameter from the diameter of the balls 15 of the adjacent trains 14 in such a way as to allow a correct distribution of the loads acting on the screw 1 itself.

The variation shown in Figure 3 differs from what is shown in the previous figures solely in the fact that, therein, two grooves 5 and, hence, the related tracks 13 are distributed along the axis 3 with a variation Δ in pitch in such a way that the screw 1 is a pre-loaded screw with zero axial play.

The screw 1 finds particularly advantageous use in steering assemblies for electrical vehicles (e.g. motor cars or forklifts), in braking devices, in pointing and tracking devices, in electromechanical presses, and in devices that require relatively small displacements of the shaft 2 or of the nut 8.

The screw 1 has some advantages mainly descending from the fact that the obtainment of the grooves 5 on the external surface 4 of the shaft 2 is relatively simply and economical and it allows to recirculate the balls 15 along the related tracks 13 without structurally weakening the shaft 2 and the nut 8.

## Claims

1. Ball screw comprising a shaft (2), which has a longitudinal axis (3), and is provided with at least one groove (5), which is obtained on an outer surface (4) of the shaft (2) itself, and comprises a first portion (6) wound helically around said axis (3); and a nut (8), which has a tread (11) obtained on an inner surface (10) of the lead nut (8), and is coupled to the shaft (2) by means of a ball recirculation coupling (12) comprising, for each groove (5), a track (13) and a train (14) of balls (15) engaged in the track (13) itself, the track (13) comprising a first segment (16), which is defined between the thread (11) of the nut (8) and the first portion (6) of the groove (5), and has an inlet end (17) and an outlet end (18); and **characterised in that** the groove (5) is closed in a loop around said axis (3) and comprises a second portion (7) defining a second segment of the track (13) for the recirculation of the balls (15) from the outlet end (18) to the inlet end (17) of said first segment (16).

2. Screw as claimed in claim 1, wherein said second portion (7) has a greater radial depth than a radial depth of said first portion (6).

3. Screw as claimed in claim 1 or 2, wherein said first portion (6) extends around said axis (3) according to an angle approximating an angle of 360° by defect.

4. Screw as claimed in any of the previous claims, wherein the nut (8) is externally limited by a continuous surface (9) substantially coaxial to said axis (3).

5. Screw as claimed in any of the previous claims and comprising a plurality of said grooves (5) distributed along said axis (3) and having respective said second portions (7) circumferentially offset relative to one other around the axis (3) itself.

6. Screw as claimed in claim 5, wherein said thread (11) has a constant first pitch (P); said grooves (5) being distributed along said axis (3) with said first pitch (P) in such a way as to define a screw with axial play.

7. Screw as claimed in claim 5, wherein said thread (11) has a constant first pitch (P); at least two said grooves (5) being distributed along said axis (3) with a second pitch (P+Δ) different from said first pitch (P) in such a way as to define a pre-loaded screw with zero axial play.

8. Screw as claimed in claim 5, wherein said thread (11) has a constant first pitch (P); said grooves (5) being distributed along said axis (3) with said first pitch (P) and each ball (15) having such a diameter as to define a pre-loaded screw with zero axial play.

9. Screw as claimed in claim 5, wherein said thread (11) has a constant first pitch (P); said grooves (5) being distributed along said axis (3) with said first pitch (P) and the balls (15) of each train (14) of balls (15) having a different diameter from the diameter of the balls (15) of the adjacent trains (14).
